Europäisches Patentamt

European Patent Office

Office européen des brevets

(19)

(11) Publication number: 0 333 466
A1

## (12) EUROPEAN PATENT APPLICATION

(21) Application number: 89302574.2

(22) Date of filing: 15.03.89

(51) Int. Cl.⁴: H 04 N 7/173

(30) Priority: 15.03.88 GB 8806111

(43) Date of publication of application:
20.09.89 Bulletin 89/38

(84) Designated Contracting States:
AT BE CH DE ES FR GB GR IT LI LU NL SE

(71) Applicant: BRITISH TELECOMMUNICATIONS public
limited company
81 Newgate Street
London EC1A 7AJ (GB)

(72) Inventor: Roberts, Simon Christopher "Cornerways"
Norrels Ride East Horsley
Leatherhead Surrey, KT24 5EH (GB)

(54) Broadband telecommunications networks.

(57) In a cable television network time division multiplexed signalling is used between a distribution centre (1) and customer termination units (5) by way of (e.g.) a "tree and branch" network (4). Each termination unit (5) is allocated a group address and a unit address. The termination units (5) are each polled in a slow track scan by forwarding of a group address, the units (5) responding in turn to provide an indication of status. If the status indicates that an activity request has been made the terminal is allocated a channel for fast track scanning. The distribution centre (1) scans each group of terminals (5) in turn and between adjacent group scans addresses active terminals. Data channel occupancy by inactive terminals is thus avoided.

Fig.1.

## Description

## BROADBAND TELECOMMUNICATIONS NETWORKS

The present invention relates to broadband telecommunications networks and more particularly but not exclusively to such networks of the kind known as "tree and branch" networks for providing "interactive" cable television service.

Television signal distribution using cable networks allows the customer access to a greater selection of television channels than may be expected by broadcast signalling. Such networks also allow service providers to be financed by their customers rather than being dependent on sponsorship, advertising or government support.

Many of the older networks (and some more recently installed) work on a tree and branch type of system where main cables emanate from a service distribution centre and branch off to customer premises as required. While such systems make provision for many channel signals to be forwarded from the service distribution centres to customers, the backward signalling capacity (i.e. from customer premises to the service distribution centre) is limited.

One consequence of the backward signalling capacity limitation is that while many two-way ("interactive") services have been proposed very few have been implemented. For example, in the United Kingdom, an interactive "videotex" type information system known as "Prestel" provides subscribers thereto with selectable pages of information in response to signals forwarded over the public switched telephone network. If adequate backward signalling capability could be provided on cable television networks, customers could be provided with a similar selectable text information service for example.

In the absence of an apparent sufficiency of backward signalling capacity to cater for several thousand customers many other proposed services such as audience polling, remote meter readings (gas, electricity and water consumption for example), alarm systems video library systems and impulse viewing of chargeable channels have been unavailable to customers of most established cable networks.

It is one object of the present invention to provide an improved cable television network which permits greater customer interactivity.

According to the present invention there is provided a broadband telecommunications network comprising a central control and $N$ terminals and a distribution network for transmitting signals defining audio, video and/or data information from the central control to the terminals characterised in that signalling on at least one transmission channel carried by the distribution network is time division multiplexed, the multiplex comprising $N$ polling channels of $a$ bits and $x$ data channels of $b$ buts (where N is greater than $x$), each of the terminals is permanently allocated to a respective one of the $N$ channels, each of the $N$ channels being scanned at periodic intervals for an activity indication from the associated terminal, each terminal supplying such an activity indicator being addressed in one of the $x$ data channels to transfer data to the central control whereby data channel occupancy by inactive terminals is inhibited.

One embodiment of a cable television network in accordance with the invention will now be described by way of example only with reference to the accompanying drawings of which:-

Figure 1 is a schematic diagram cable television network of the "tree and branch" type.

Figure 2 is a schematic diagram of a cable television network of the "switched star" type;

Figure 3 is a data flow diagram showing the time division multiplexing arrangement used in the invention;

Figure 4 is a data bit diagram showing the use to which address and data bits are put;

Figure 5 is a schematic diagram of additional apparatus provided at the head end and in the customer termination units of the networks of Figures 1 & 2; and Figures 6 to 15 are circuit diagrams relating to the circuit blocks of Figure 5.

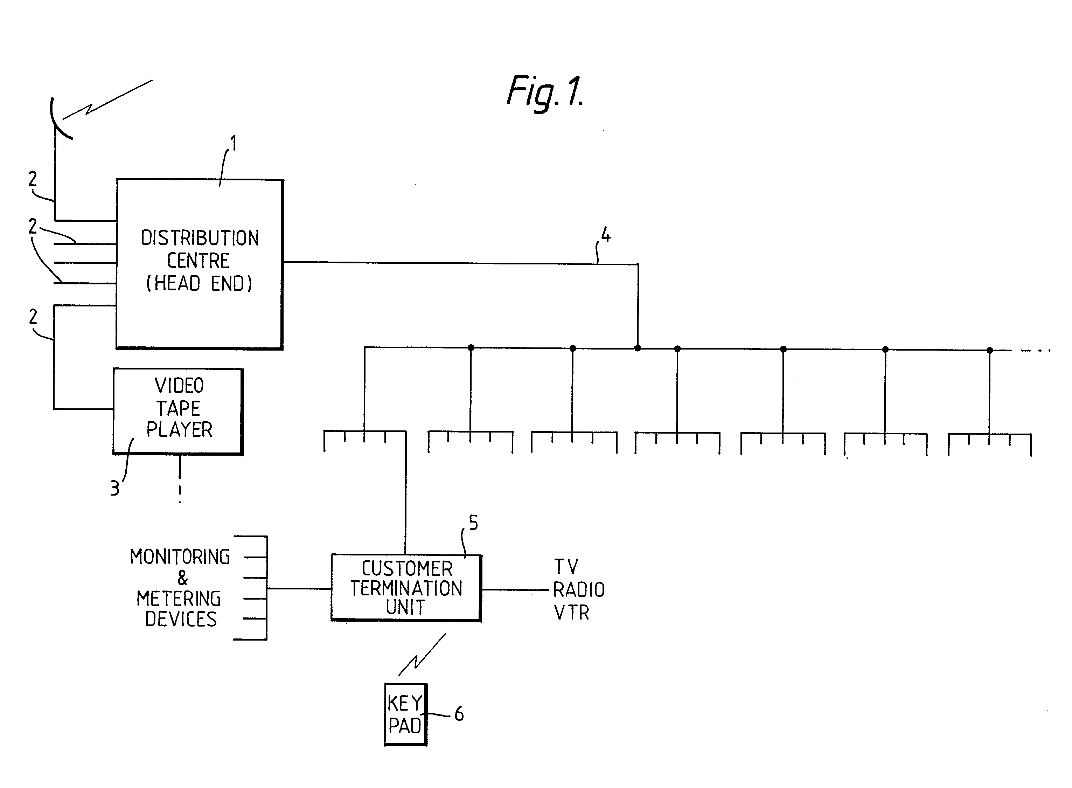

The invention will be described herein with reference to cable television distribution networks of two kinds the first of which is a simple "tree and branch" system schematically depicted in Figure 1 to which reference is now made.

In the network of Figure 1 a distribution centre 1 receives television signals from e.g. satellite, broadcast receivers or land line at inputs 2 or from in-house video tape players (e.g. 3) in the distribution centre or local studio cameras. The received signals are decoded and frequency multiplexed to provide output signals for distribution on coaxial cable net 4 for example. The cable is tapped at intervals and may be amplified. Basically, however, all customers of the cable company receive all of the output signals.

At the customer premises a customer termination unit 5 is provided which demodulates the network signals and outputs the selected signal at a predetermined frequency to customer apparatus such as a television receiver or video taperecorder for example. The network may also be used for providing stereo sound reception associated with particular television channels.

The customer selects television channels to view either by use of a keypad 6 giving so-called remote control or by use of selection buttons on the unit 5. The determination of channel availability at the customer termination unit 5 may be carried out by the installer in dependance on the level of service paid for by the customer or may be remotely controlled from the distribution centre 1 selectively addressing a microprocessor in the unit 5 using a control channel of the network 4 so that availability of particular "paid for" channels can be varied at customer request. In previous systems of this type the customer must contact staff at the distribution centre who interface with a control computer which forwards the necessary control signals to the unit 5. Thus "short term" changes are undesirable from the cable company's point of view and difficult from the customer's point of view.

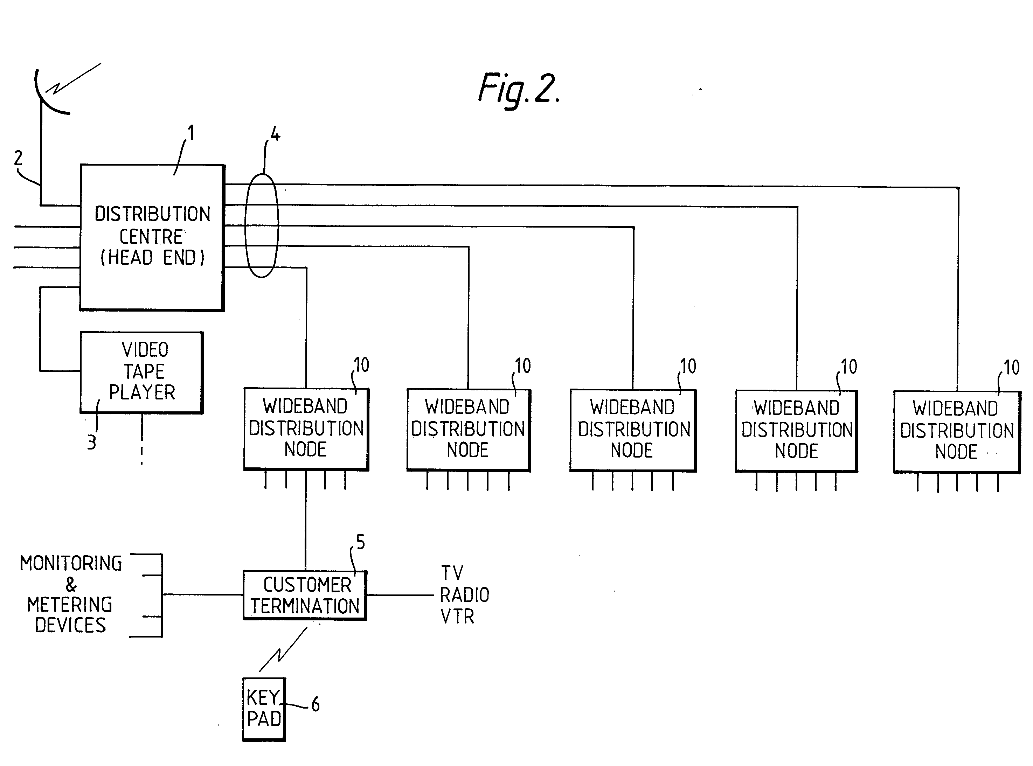

The network of Figure 2 is similar to that of Figure 1 except that a number of wideband distribution nodes 10 are provided. The distribution nodes 10 may include the "intelligence" relating to distribution of channels to the customer, the customer termination 5 forwarding a channel request which is acted on at the distribution node 10 in dependance on service availability information held in a computer. Thus if a channel request is received at the distribution node 10 from a customer termination unit 5, the local computer checks whether the particular customer is authorised to receive the selected channel.

Again, any change in service requirement requires operator intervention in that customer data is downloaded to the computer in the distribution node 10 from the head end distribution centre 1. The system of Figure 2 is sometimes called a switched star system.

In the network of the present invention, the distribution centre 1 or the wideband distribution nodes 10 are modified to include a polling system using one backward signalling channel for each block of approximately one thousand customers.

The ten bit address required to identify each terminal individually is divided into a four bit group address and a six bit unit address. The four bit group address is used to call groups of sixty three units in a "slow track" to identify customers requiring connection to service. Each unit in a group responds to the group address by forwarding a response in its own time slot, (the polling channel) the time slot being related to the unit address of the customer termination unit 5. Although the response may be a single digit in practice the unit address is forwarded which permits a security check to be made and simplifies identification of a customer request.

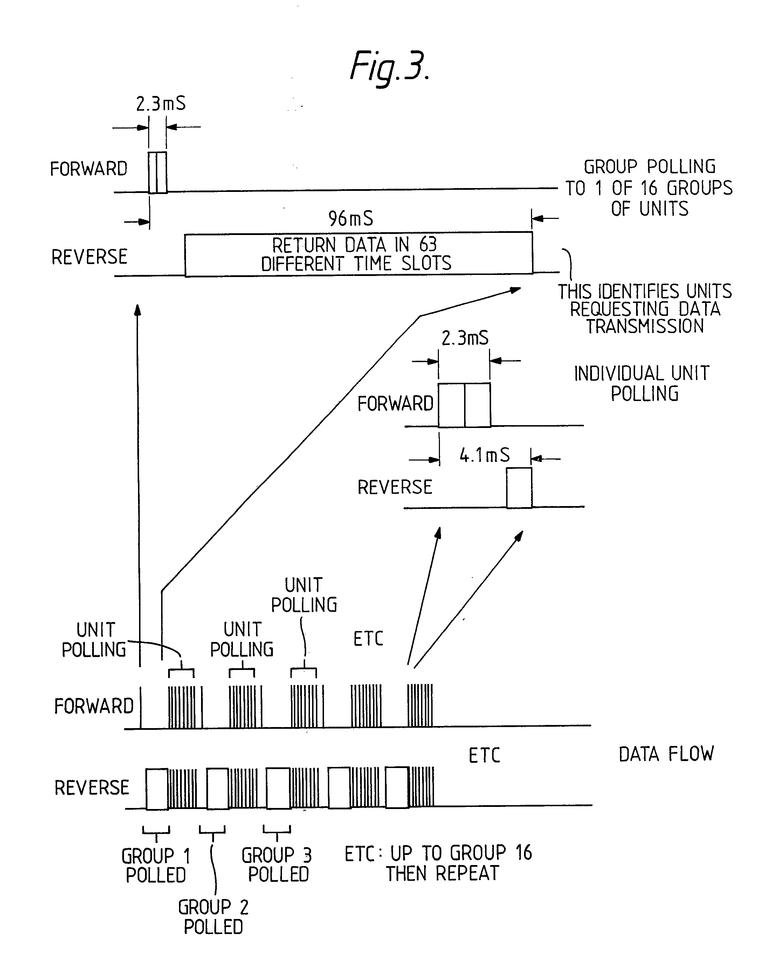

Referring now to Figure 3, each of the sixteen customer groups is polled in turn, with one group being polled between each scan of active customer terminals. This group scanning is referred to herein as slow track scanning. Inactive customer termination units are scanned approximately once every four seconds when the presumed maximum of twenty customers in a group or network of 1000 terminals are involved in active sessions.

Thus customers requesting access to interactive service facilities may wait for a maximum "connect to service" time of four seconds before receiving a response.

Once data returned in the slow track indicates a requirement for interactive data transfer, the customer unit polling transfers to "fast track" scanning. As previously noted between each group poll, active customers are scanned. In the present case between each group poll, up to a maximum of twenty individual customer termination units may be scanned. Thus, once a particular unit is transferred to the fast track, it is scanned once approximately every two hundred and twenty milliseconds.

In practice, since fast track scanning is only of "active" customer termination units ("on demand") the time spent polling data channels in the fast track may be much less. Thus if no customer termination unit is active the "connect to service" time will be of the order of two seconds since slow track scanning will take approximately 1.6 seconds.

The relative data flow is shown in Figure 3, the first group, group 1 being shown expanded with a total scan time of 98.3 milliseconds comprising two bytes of data from the distribution centre, the first of which defines the group to be scanned and the second of which indicates that this time slot is for group slow scan polling. The second byte of data (all "zeros") is used to indicate a group poll hence each group comprising only 63 customer termination units.

In the fast track, which follows each group poll as previously mentioned the forward data from the distribution centre comprises a first byte defining the group and a second byte defining one of the customer termination units in that group. The addressed unit responds with an eight bit data package.

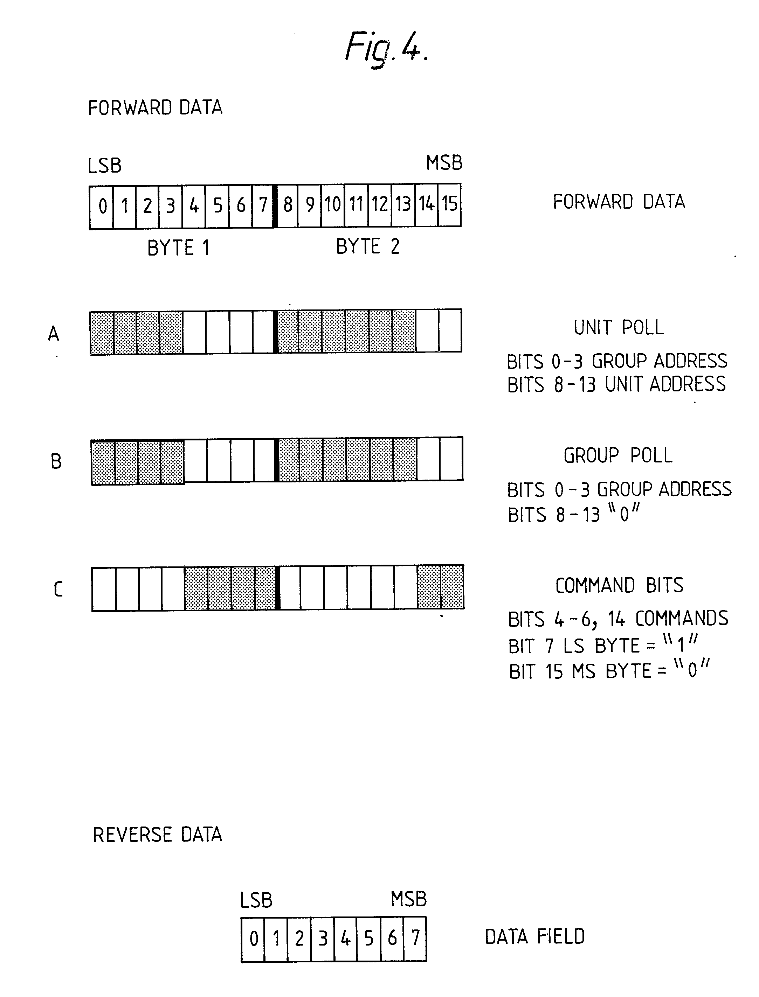

Data is transmitted in each direction at 9.6 kilobits per second using frequency shift keying. The data structure of the forward and reverse channels is shown in Figure 4 to which reference is now made. The forward data comprises two bytes the first byte having bits 0 - 3 used as the group address and the second byte as the unit address bits 8 - 13. Bits 4 to 6 of the first byte and bit 14 of the second byte are used for commands to customer termination units while bit 7 is always binary one and bit 15 is always binary zero to provide timing certification.

The four command bits may be used to give up to fifteen commands to customer termination units, for example a command to transfer specified metering information or display special data in connection with a requested service.

Forward data is transmitted from the distribution centre at 147 MHz and 24 MHz is used in the return direction although other frequencies may be used at the option of the system owner. The system uses FSK modulation and has a bandwidth in each direction of 30 KHz with a 50 KHz channel spacing which is well within the capability of simple available filters.

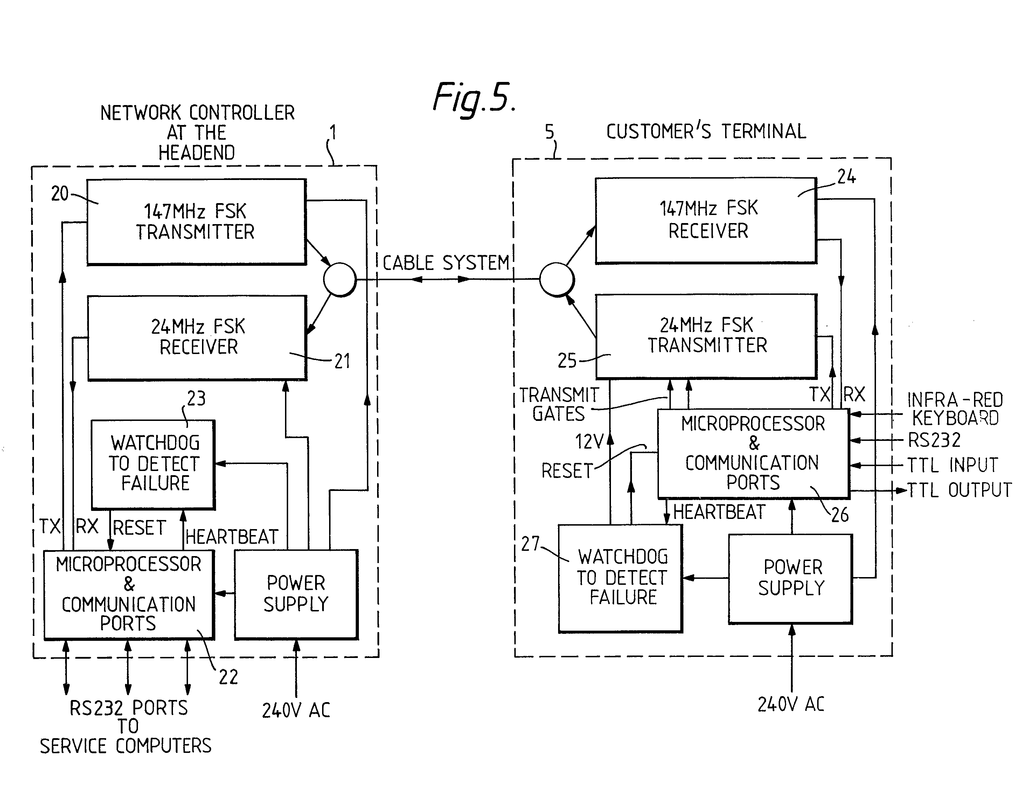

Referring now to Figure 5 the interface at the distribution centre 1 comprises a 147 Megaherz transmitter 20, a 24 Megaherz receiver 21 and a microprocessor 22 which controls the scanning arrangements and interfaces with service computers in the distribution centre. To ensure integrity of the system, the microprocessor 22 is arranged to output a heartbeat signal at periodic intervals. This signal is monitored by a watchdog circuit 23 which is arranged to cause a reset signal to be applied to the microprocessor 22 should a timer expire without the heartbeat signal being received.

In the customer termination unit 5, a 147 MHz receiver 24 and a 24 MHz transmitter 25 are provided again controlled by a microprocessor 26. The microprocessor 26 again provides heartbeat signals monitored by a watchdog circuit 27 since any failure in the customer termination unit 5 could cause problems with service provision to other customers.

Prior to considering one particular service in detail, a brief outline of the functioning of several services is now given. The service to be considered in detail hereinafter is a videotex service (for example to permit customer interaction with a data base such as British Telecommunications Prestel service). To link in to videotex, the customer actuates a "connect to service" button on his keyboard.

The microprocessor 26 on receiving the service signal waits for the next "group poll" signal from the head end and then forwards the service signal (comprising its unit address) in its own time slot. The time slot to be used is determined by counting time channels from the receipt of the group poll signal up to the unit address. Thus a customer termination unit 5 which has a unit address of one transmits its address of "000001" in time slot 1, while a termination unit 5 having a unit address of sixty three transmits its address of "111111" in time slot 63.

At the head end, the microprocessor 22 on receiving the unit address associates it with the group address and, provided that there are vacancies in the system places the group and unit address in the "active" list. The specific customer unit will now be polled in the next fast track scan.

On receipt of its group and unit address, from the head end 1, the microprocessor 26 will now cause transmission of a character indicating the type of service requested which, if the character indicates a videotext service request, causes the microprocessor 22 to interact with the specific service computer.

The customer termination unit remains in the active queue either until the customer uses his keypad to indicate that he has finished thus causing the microprocessor 26 to cause transmission of a "session over" signal on the next fast track scan or until a pre specified time has elapsed without the customer operating further keys of the keypad.

For "Audience Polling" the customer keypad is provided with special buttons which cause particular data to be transmitted without actually initiating an active session. On detecting operation of one of the special buttons the microprocessor 26 causes a session request in the slow track as previously described. If a fast track slot is available, the microprocessor 22 effects addressing of the customer termination unit which then causes transmission of data indicating the customer's vote. On detecting that this is an audience polling response, the microprocessor 22 causes the customers group and unit address to be transferred to a polling computer together with the character indicating the vote and deletes the particular terminal from the fast track. The polling computer eliminates (eg) multiple votes from a terminal and stores the actual polling record.

The microprocessor 26 will continue to request access on each slow track scan until it has transferred its data character. Thus, even if a heavy response to a poll is received, the customer's response will be recorded. The microprocessor 22 only allows a limited number of concurrent sessions to occur so that the fast track does not become overloaded but in circumstances in which most fast track slots are available a complete poll of a capacity 1000 terminals may be carried out in less than one minute.

Alarm signalling is provided by connection of an alarm panel through a TTL input to the microprocessor 26. On receipt of an alarm signal, the microprocessor 26 forwards a connect to service request in the slow track and continues to forward this signal until a unit scan signal is received whereupon it causes appropriate alarm data to be forwarded.

The microprocessor 22 on receipt of an alarm signal returns an acknowledgement using the command bits and forwards group and unit addresses and type of alarm signal to a service computer which may then alert appropriate service centres.

On receipt of an acknowledgement, the microprocessor 26 forwards an indication signal on TTL output lines to the alarm unit. The microprocessor 22 causes periodic special unit polls to each customer unit 5 to confirm that the alarm system is functional.

For metering purposes (eg gas, electricity or water meters) an RS232 input is provided to the microprocessor 26. A meter service computer in the distribution centre 1 requests periodic metering on behalf of the supplying company. This will cause the microprocessor 22 to forward an unprompted fast track address to the customer unit 5 with an appropriate command signal.

On receipt of this signal, the microprocessor 26 forwards the demand by way of the RS232 output to the appropriate meter circuit. On receipt of data from the meter, the microprocessor 26 causes connect to service, transmits the data in the next 'n' fast track scans as it is addressed and on completion of data transmission forwards a session over signal.

The system may also be used to monitor the status of the cable network and particular customer termination units. Thus each customer unit may be addressed using a command which causes the microprocessor to return a single character. By increasing the attenuation in the forward path until a unit fails to respond and recording the level at which this occurs a database of attenuation values for all customers may be built up. Any drift in values on subsequent scans may be used to identify potential faults in the cable network.

To provide "Impulse Pay Per View" services, a special service button on the customers keypad may be used to cause a connect session with a customer service computer at the head end. Customers may be offered a number of service options - for example by rotating text messages to the customers television, the customer accepting a particular service by operating the audience polling key. If greater control is required then the customer may be required to enter a personal identification number to accept the offered service, this being forwarded to the head end as previously described for metering. Command signals returned in the fast track may be used to cause the controller in the customer unit 5 to accept a particular channel. The customer may now be charged for reception of the particular channel either for a predetermined period or for a particular programme.

Impulse pay per view sessions may be terminated either by the customer by forwarding a session termination request, by the controller detecting that the customer has changed channels or by the head end offering further programme acceptance requests at the end of the selected programme.

The services hereinbefore described may be supplied in the system of Figure 2 by providing the basic scanning system at each of the wideband distribution nodes 10, data transfer to and from the head end 1 being by high speed data link. In this type of network, the proportion of active customers may accordingly be much higher since the microprocessor and time division multiplexed highways have a reduced number of customers to service.

In order to provide the videotex service to customers, a videotex server computer is provided in the distribution centre 1. Customers requesting connection to videotext services have keyboard entries for page requests forwarded by their respective microprocessors 26 in the fast track scan mode. It is assumed herein that customers wishing to use videotex services have television receivers including teletext reception facilities or have a teletext receiver adaptor in each case having the ability to recognise time encoded page data.

The videotex service computer on receiving a service request allocates to the customer a page and a nominal time. The nominal time is an additional identifier for the specific customer and not real time. The page number and time may be transmitted to the customer in the commands of the fast track scan and are output to the customer so that the customer may set his teletext receiver to find that page and time.

Alternatively each customer has a pre-allocated channel, page and time which is identified by the service computer on receipt of a connection request.

The customer may now interact with the host computer (eg Prestel) in the same manner as a customer interconnected by PSTN.

As the customer enters data from his keypad, the data is forwarded by the microprocessor 26 to the head end 1. The videotex server assembles the data received and forwards the demand to specified host data base at the same time echoing the customers entered data to the receiver.

On receipt of the requested data page from the host data base, the videotex server assembles a teletext page for transmission, enters the respective time encoding and causes the data to be transmitted in the particular channel in the usual manner of transmitting teletext pages with picture information.

As the pages are time encoded only customers who have set their teletext receivers to receive a time encoded page will have the appropriate data displayed.

The videotex server maintains a record of the status of each customers group and unit identifiers and their current data base page so that each customer request may be appropriately handled without the customer holding an independant line to the host data base. Thus, if several customers are active with one host data base, each customers request may be handled in turn over a single link between the videotex service computer and the host data base.

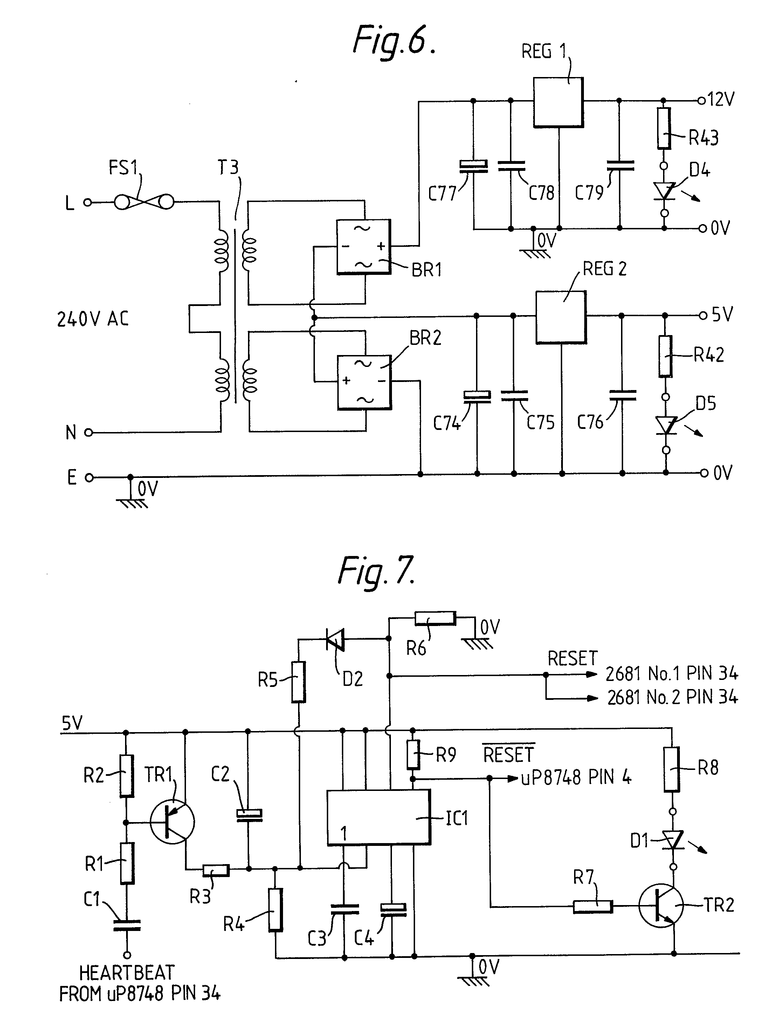

Referring now to Figures 5 and 6, the power supply unit for the network controller 1 is required to supply a stabilized 5 volt and stabilized 12 volt output. Figure 6 shows a suitable arrangement for deriving these voltages from a 240 volt AC input.

All of the components of the circuit of Figure 6 are commercially available components of known kind. Transformer (T3) is a 240 volt AC input having two nine volt outputs with a centre tap at nominal zero volts. BR1 and BR2 are semi-conductor bridges type KBU4D available from Radio Spares Limited under catalogue number 630-803. Regulators Reg 1 and Reg 2 are respectively regulator types 78M12 and 78M05. If a voltage indication is required then light emitting diodes D4 and D5 may be provided respectively accompanied by a 1K Ohm resistor R43 and a 270 Ohm resistor R42.

Capacitors C74 and C77 are each 10,000 microfarad electrolitic capacitors, the remaining capacitors shown C75, C76, C78 and C79 each being 100 nanofarad capacitors.

Figure 7 shows the watchdog 23 of Figure 5 in greater detail. This comprises an integrated circuit IC1 of type TL7705 which receives a heartbeat pulse from the microprocessor 22. If the heartbeat pulse is not received from the microprocessor 22 then IC1 will cause a reset signal to be forwarded to the microprocessor unless reset is inhibited. To inhibit the reset signal the path from zero volts by way of resistor R6 diode D2 and resistor R5 is left unconnected. This permits an operator to ascertain the program point at which the microprocessor 22 has failed. A light emitting diode D1 indicates normal function of the circuit.

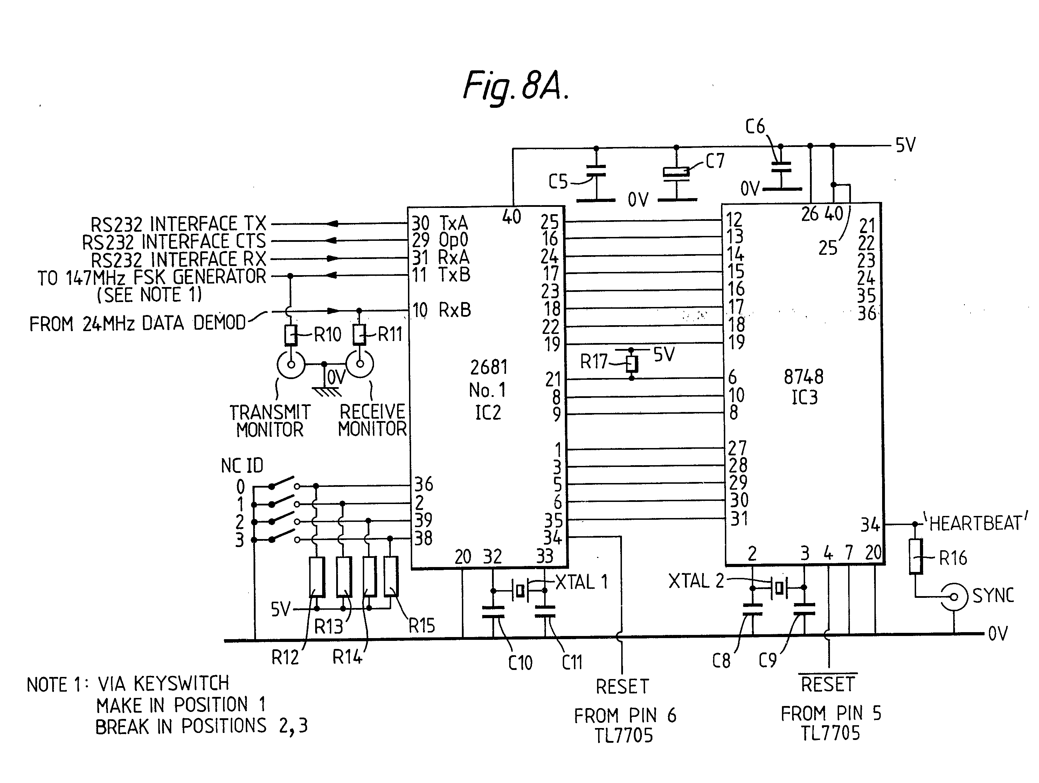

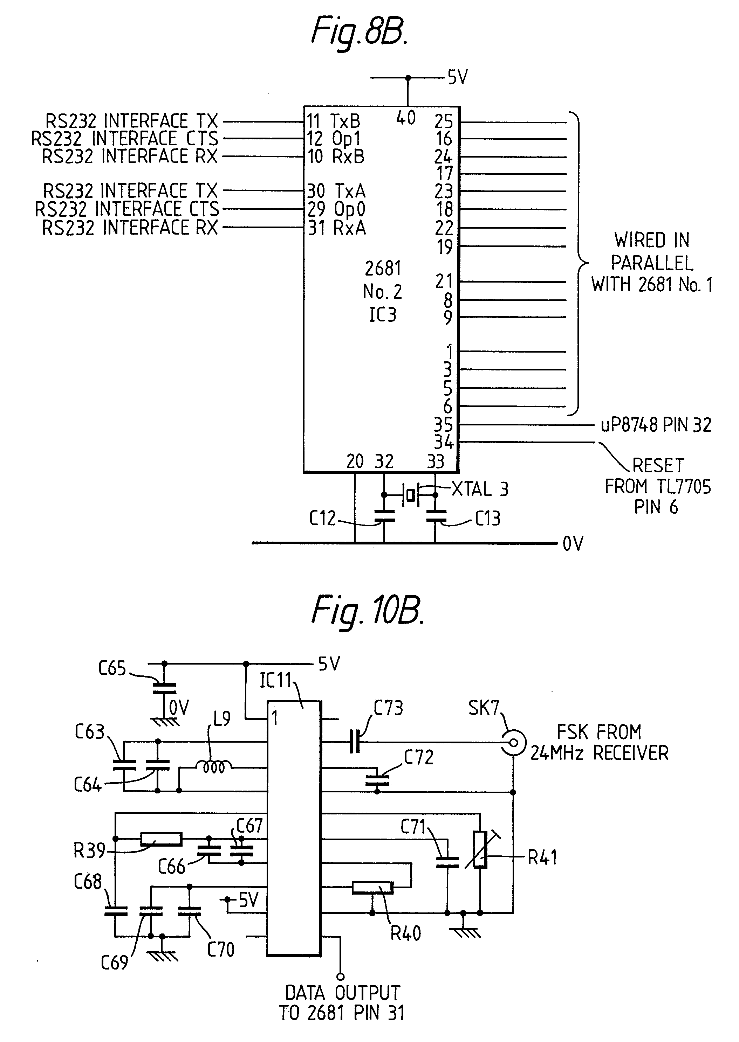

The microprocessor and communication ports 22 of Figure 5 are shown in Figures 8A and 8B. The microprocessor is shown as IC3 and comprises an 8748 microprocessor which controls four RS232 ports by way of integrated circuits IC2 and IC4 each of which is an integrated circuit type 2681.

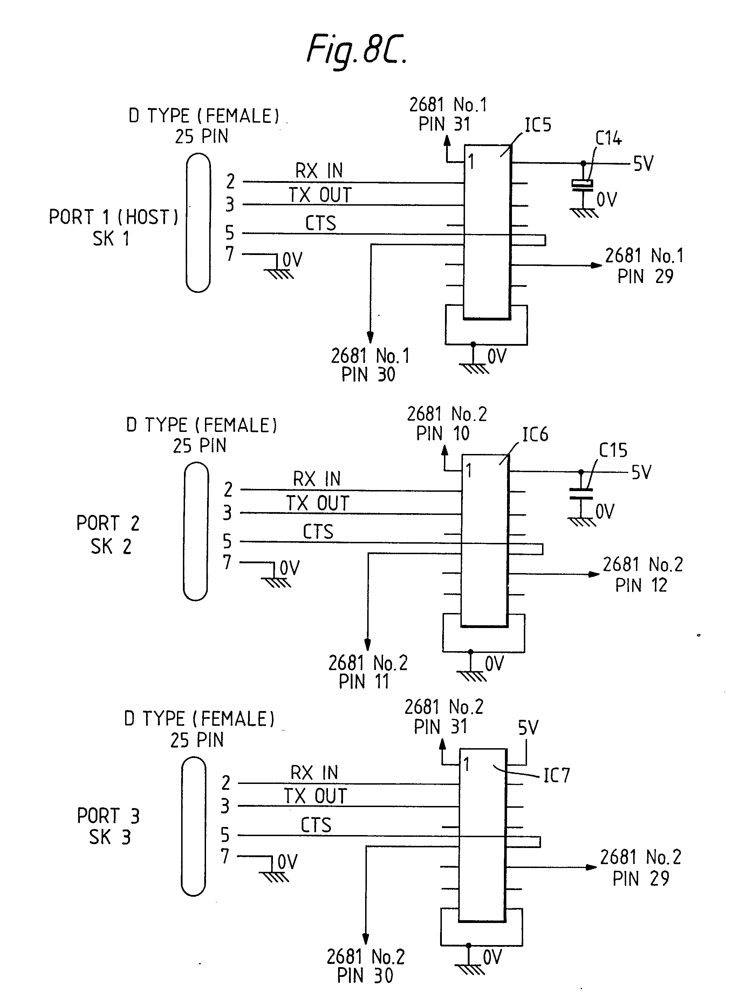

Figure 8c shows the interconnection between the interface circuits IC2 and IC4 and D type female plugs for connection to service computers. The final interface chip circuits each comprise an intergrted circuit type RS232CD available from Radio Spares Limited under their catalogue number 633082.

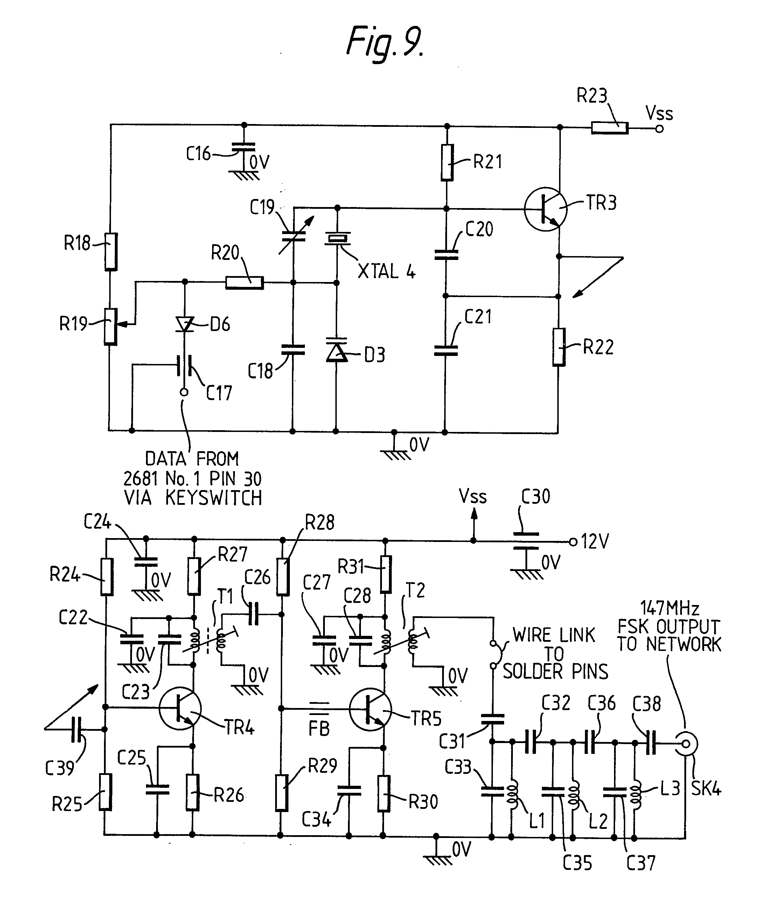

Referring now to Figure 9 the transmitter 20 of Figure 5 receives TTL level serial data from the microprocessor 22 and effects a conversion to frequency shifted key (FSK) carrier at 24.5 megaHertz. An up convertor translates the 24.5 megaHertz FSK signal in two stages to a 147 megaHertz FSK output for the cable TV network.

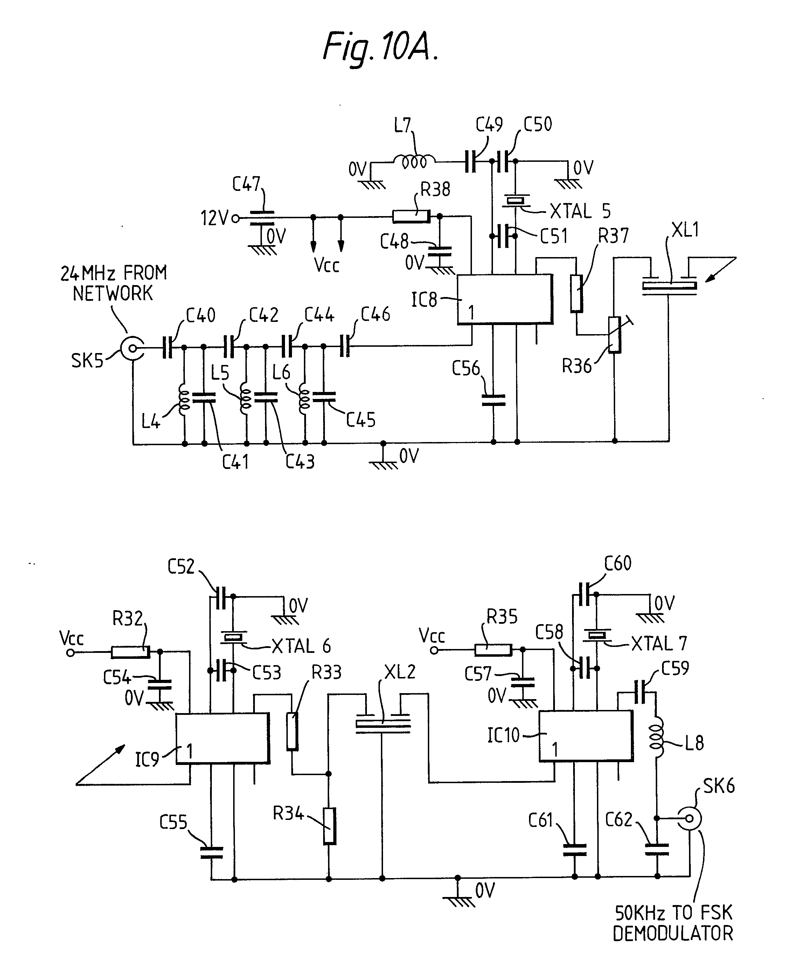

Figure 10 shows the 24 megaHertz receiver 21 of Figure 5. The receiver of Figure 10 converts the filtered incoming signal from the cable network in three stages giving a first intermediate frequency of 10.7 megaHertz followed by a second intermediate frequency of 455 kiloHertz the output of which is filtered to give required selectivity. The output is an FSK signal centred on 50 kiloHertz which is supplied to a demodulator which is arranged to output TTL serial data to the microprocessor 22.

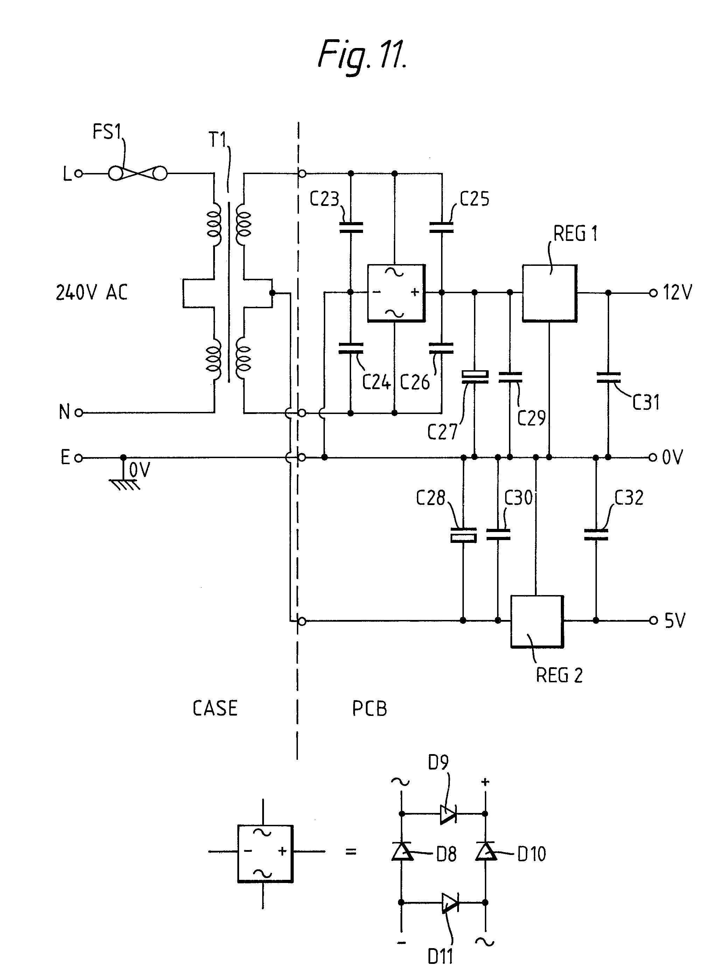

The customer terminal 5 of Figure 5 will now be considered. The customer terminal power supply is essentially similar to the network terminal power supply previously described with reference to Figure 6 in so far as it is required to produce 12 volt and 5 volt outputs. However, since the power output requirement of the customer terminal is significantly less than that required by the network controller only a simple four diode bridge rectifier is used. The customer terminal power supply is shown in Figure 11.

The customer terminal watchdog 27 is identical to the network controller watchdog 23 and is therefore not further described herein.

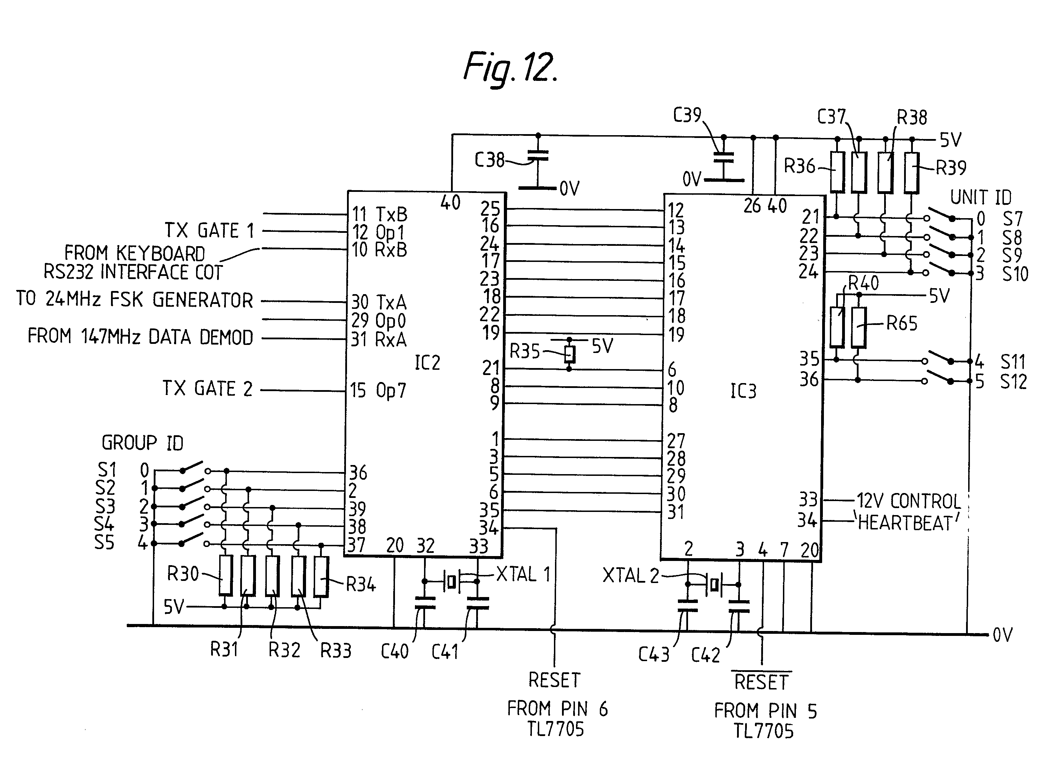

Referring now to Figure 12 the microprocessor and communication ports 26 of Figure 5 are shown. The circuit essentially comprises a microprocessor IC3 type 8748 and an interface circuit IC2 being integrated circuit type 2681. Two dual in-line switches each having six single pole switches are arranged respectively for setting the group identification and unit identification for detecting network polling and addressing signals.

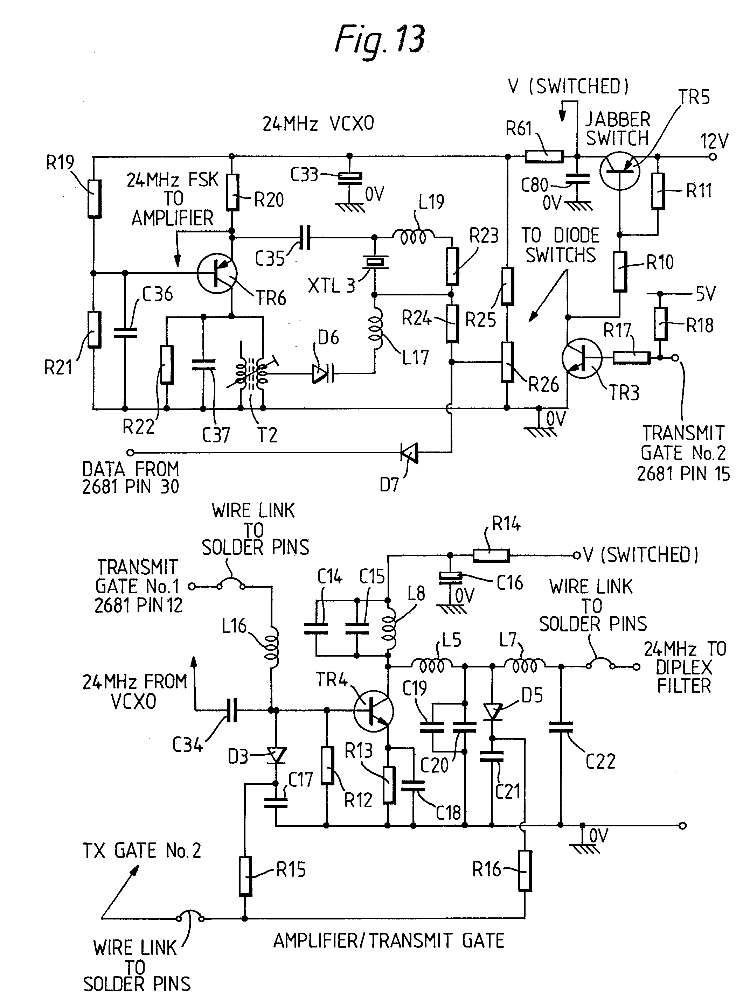

Figure 13 shows the 24 megaHertz FSK generator circuit for the transmitter 25 of Figure 5. The FSK generator shown converts TTL level serial data received from the digital board (Figure 12) to a frequency shift carrier at 24 megaHertz in known manner. The FSK carrier is amplified by about 27dB which is output to the return path by way of an amplifier and transmit gate shown towards the lower end of Figure 13. The two transmit gates turn the amplifier on and off when the terminal is actually transmitting.

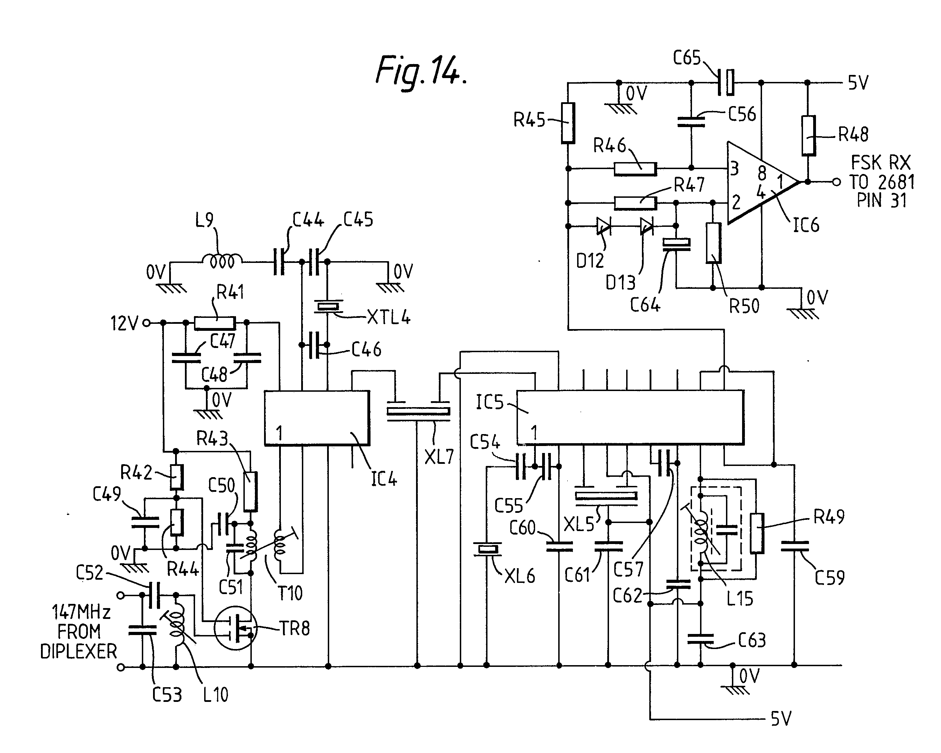

Turning now to Figure 14 the 147 megaHertz receiver 24 of Figure 5 is arranged to convert the incoming signal to a first intermediate frequency of 10.7 megaHertz. The first intermediate frequency is converted to a second intermediate frequency of 455 kiloHertz which is filtered to give required selectivity. An FSK de-modulator outputs TTL level serial data derived from the FSK signal to the digital board.

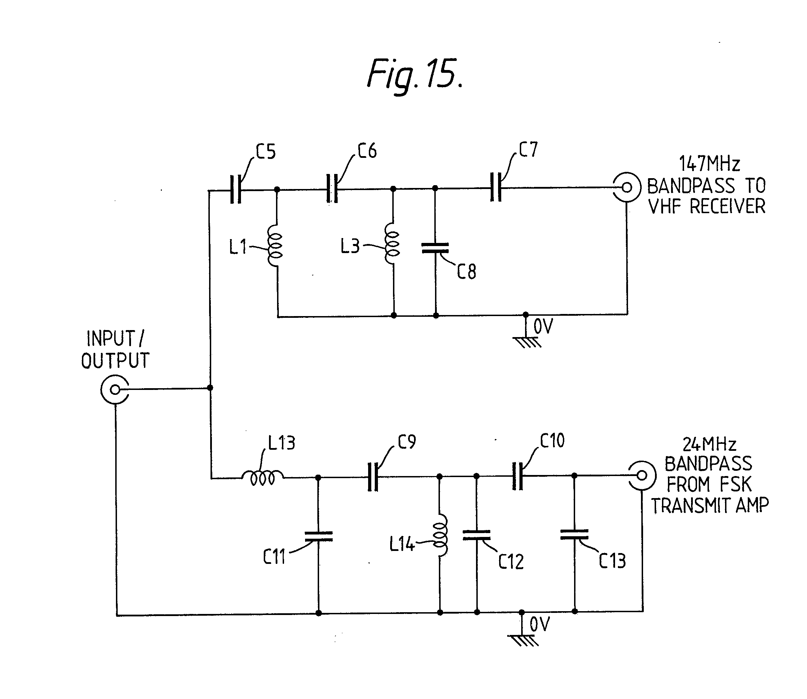

Figure 15 shows the duplexer used in the customer terminal for isolating the 24 megaHertz transmitted signal and the 147 megaHertz received signal.

## Claims

1. A broadband telecommunications network comprising a central control (1) and $N$ terminals (5) and a distribution network (4) for transmitting signals defining audio, video and/or data information from the central control (1) to the terminals (5) characterised in that signalling on at least one reverse transmission channel carried by the distribution network (4) is time division multiplexed, the multiplex comprising $N$ polling channels of $a$ bits and $x$ data channels of $b$ bits (where N is greater than x), each of the terminals (5) is permanently allocated to a respective one of the $N$ channels, each of the $N$ channels being scanned at periodic intervals for an activity indication from the associated terminal (5), each terminal (5) supplying such an activity indicator being addressed in one of the $x$ data channels to transfer data to the central control (1) whereby data channel occupancy by inactive terminals is inhibited.

2. A broadband telecommunications network as claimed in claim 1 further characterised in that the distribution network (4) comprises a plurality of distribution nodes (10) each servicing a group comprising a respective plurality of terminals (5).

3. A broadband telecommunitions network as claimed in claim 2 further characterised in that the distribution nodes (40) each control polling and data channel allocation for the respective groups of terminals (5), the distribution nodes (10) multiplexing and demultiplexing data transfers between the control (1) and the terminals (5).

4. A broadband telecommunications network as claimed in claim 1, claim 2 or claim 3 further characterised in that each terminal (5) has a multi-bit group address and a respective multi-bit unit address, the control (1) effecting polling by forwarding signals defining a group address on the distribution network (4), each terminal (5) on detecting its respective group address returning data identifying terminal status in a subsequent time slot of the polling channel, the selected time slot being related to the unit address.

5. A broadband telecommunications network as claimed in claim 4 further characterised in that the central control (1) is arranged to effect polling of each group of terminals (5) in turn and to address each terminal (5) to which a data channel has been allocated (if any) between each group poll.

6. A broadband telecommunications network as claimed in claim 5 characterised in that the central control (1) forwards signals defining the group and unit addresses of a respective terminal (5) to which a data channel has been allocated, the terminal (5) responding by forwarding signals defining data to the control in the allocated data channel.

7. A cable television network comprising a broadband telecommunications network as claimed in any preceding claim characterised in that a signal distribution centre comprises the control (1) and connections to a plurality of signal sources, the distribution centre being responsive to data received from respective terminals (5) to effect or inhibit access to such signal sources in dependance upon selection indications entered by users of the terminals.

8. A cable television network as claimed in claim 7 further characterised in that at least one signal source comprises a video-text service computer, the distribution centre interfacing page request data received from terminals (5) to the service computer.

9. A cable television network as claimed in claim 8 further characterised in that the distribution centre is arranged, on receipt of data from a terminal (5) defining a request for connection to a videotext terminal, to identify a television reception channel and a teletext page number to the requesting terminal, the distribution centre causing each page of information received from the videotext service computer to be transmitted as teletext data on the allocated television channel with the allocated page number.

10. A cable television network as claimed in claim 9 further characterised in that the distribution centre is also arranged to identify a nominal time, each page of the teletext data being transmitted including time encoded data defining the nominal time.

11. A cable television network as claimed in claim 7 further characterised in that at least some of the terminals (5) are connected to interface circuits associated with service metering apparatus, the distribution centre being responsive to a request from a service company to cause signals to be forwarded to the respective terminals to effect transfer of data defining a meter reading.

12. A cable television network as claimed in claim 7 further characterised in that at least some of the customer terminals (5) are linked to respective detectors for providing alarms, the terminal being responsive to an alarm signal to initiate a service request to the distribution centre and to forward signals defining the alarm.

13. A cable television network as claimed in claim 7 further characterised in that the distribution centre is responsive to signals received from customer terminals to enable or disable access to particular television channels and to effect transfer of billing information to a service computer in respect of such access.

14. A cable television network as claimed in claim 7 further characterised in that the distribution centre is responsive to signals received in allocated data channels to record a voting indication from a customer terminal without initiating a further scan of the terminal.

Fig.1.

EP 0 333 466 A1

Fig.2.

# Fig.3.

2.3mS

FORWARD

GROUP POLLING
TO 1 OF 16 GROUPS
OF UNITS

96mS

REVERSE

RETURN DATA IN 63
DIFFERENT TIME SLOTS

THIS IDENTIFIES UNITS
REQUESTING DATA
TRANSMISSION

2.3mS

FORWARD

INDIVIDUAL UNIT
POLLING

4.1mS

REVERSE

UNIT
POLLING

UNIT
POLLING

UNIT
POLLING

ETC

FORWARD

ETC

DATA FLOW

REVERSE

GROUP 1
POLLED

GROUP 3
POLLED

ETC: UP TO GROUP 16
THEN REPEAT

GROUP 2
POLLED

# Fig.4.

FORWARD DATA

LSB                                    MSB

| 0 | 1 | 2 | 3 | 4 | 5 | 6 | 7 | 8 | 9 | 10 | 11 | 12 | 13 | 14 | 15 |

BYTE 1                    BYTE 2

FORWARD DATA

A

UNIT POLL

BITS 0-3 GROUP ADDRESS
BITS 8-13 UNIT ADDRESS

B

GROUP POLL

BITS 0-3 GROUP ADDRESS
BITS 8-13 "0"

C

COMMAND BITS

BITS 4-6, 14 COMMANDS
BIT 7 LS BYTE = "1"
BIT 15 MS BYTE = "0"

REVERSE DATA

LSB              MSB

| 0 | 1 | 2 | 3 | 4 | 5 | 6 | 7 |

DATA FIELD

# Fig.5.

NETWORK CONTROLLER AT THE HEADEND

1

20 — 147MHz FSK TRANSMITTER

24MHz FSK RECEIVER — 21

CABLE SYSTEM

23 — WATCHDOG TO DETECT FAILURE

TX RX RESET HEARTBEAT

MICROPROCESSOR & COMMUNICATION PORTS — 22

POWER SUPPLY

RS232 PORTS TO SERVICE COMPUTERS

240V AC

5

CUSTOMER'S TERMINAL

24 — 147MHz FSK RECEIVER

25 — 24MHz FSK TRANSMITTER

TRANSMIT GATES

12V

RESET

HEARTBEAT

TX RX

MICROPROCESSOR & COMMUNICATION PORTS

26

INFRA-RED KEYBOARD
RS232
TTL INPUT
TTL OUTPUT

27 — WATCHDOG TO DETECT FAILURE

POWER SUPPLY

240V AC

EP 0 333 466 A1

## Fig.6.

## Fig.7.

# Fig.8A.

RS232 INTERFACE TX
RS232 INTERFACE CTS
RS232 INTERFACE RX
TO 147MHz FSK GENERATOR
(SEE NOTE 1)
FROM 24MHz DATA DEMOD

30 TxA
29 Op0
31 RxA
11 TxB
10 RxB

R10   R11

TRANSMIT   RECEIVE
MONITOR    MONITOR

2681
No.1
IC2

C5   C7   C6   5V
0V         0V

40   25
16
24
17
23
18
22
19

R17   5V

12
13
14
15
16
17
18
19

26 40   21
25      22
        23
        24
        35
        36

8748
IC3

6
10
8

NC ID
0
1
2
3

36
2
39
38

5V
R12  R13  R14  R15

20 32

21
8
9

1
3
5
6
35
34
33

27
28
29
30
31

34

2   3 4 7 20

'HEARTBEAT'

R16

SYNC

0V

XTAL 1
C10   C11

XTAL 2
C8   C9

RESET
FROM PIN 6
TL7705

RESET
FROM PIN 5
TL7705

NOTE 1: VIA KEYSWITCH
MAKE IN POSITION 1
BREAK IN POSITIONS 2,3

EP 0 333 466 A1

## Fig.8B.

## Fig.10B.

# Fig.8C.

# Fig.9.

DATA FROM
2681 No.1 PIN 30
VIA KEYSWITCH

147MHz
FSK OUTPUT
TO NETWORK

WIRE LINK
TO
SOLDER PINS

Fig.10A.

# Fig. 11.

Fig.12.

## Fig.13

Fig. 14.

# Fig.15.

147MHz BANDPASS TO VHF RECEIVER

C5   C6   C7

L1   L3   C8

0V

INPUT / OUTPUT

L13   C9   C10

24MHz BANDPASS FROM FSK TRANSMIT AMP

C11   L14   C12   C13

0V

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 702 008 (GROTH) <br> * Column 3, line 25 - column 5, line 26 * | 1,2 | H 04 N 7/173 |
| A | US-A-4 340 961 (CAPEL et al.) <br> * Column 3, line 36 - column 4, line 6 * | 1 | |
| A | US-A-3 836 888 (BOENKE et al.) <br> * Column 3, line 35 - column 11, line 35 - column 11, line 21 * | 1-4 | |
| A | IEEE SPECTRUM, vol. 8, no. 11, November 1971, pages 39-54; R.K. JURGEN: "Two-way applications for cable television systems in the '70s" <br> * Page 49, left-hand column, line 9 - page 50, line 19 * | 1,7,11-14 | |
| A | EP-A-0 145 063 (INTERNATIONAL STANDARD ELECTRIC CORP.) <br> * Page 4, line 9 - page 8, line 16 * | 7-9 | |

TECHNICAL FIELDS SEARCHED (Int. Cl.4)

H 04 N 7/00
H 04 L 11/00

The present search report has been drawn up for all claims

| Place of search | Date of completion of the search | Examiner |
|---|---|---|
| THE HAGUE | 13-06-1989 | HAZEL J.F. |

EPO FORM 1503 03.82 (P0401)